(19) **Europäisches Patentamt / European Patent Office / Office européen des brevets**

(11) **EP 1 764 147 A1**

(12) # EUROPEAN PATENT APPLICATION

(43) Date of publication:
21.03.2007   Bulletin 2007/12

(51) Int Cl.:
***B01D 69/12*** *(2006.01)*

(21) Application number: **05077144.3**

(22) Date of filing: **20.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Nederlandse Organisatie voor Toegepast-Natuurwetenschappelijk Onderzoek TNO**
**2628 VK  Delft (NL)**

(72) Inventors:
• **Buijs, Henricus Carolus Willibrordus Maria**
**5674 VS Nuenen (NL)**

• **Vercauteren, Franky Flory**
**5644 DK Eindhoven (NL)**
• **Peters, Thijs Andries**
**4813 GD Breda (NL)**
• **Benes, Nieck Edwin**
**5685 AC Best (NL)**
• **Keurentjes, Johannes Theodorus Faustinus**
**5708 EH Helmond (NL)**
• **Van Soest-Vercammen, Esther Lucia Johanna**
**7334 DT Apeldoorn (NL)**

(74) Representative: **Winckels, Johannes Hubertus F. et al**
**Vereenigde**
**Johan de Wittlaan 7**
**2517 JR  Den Haag (NL)**

(54) ## Composite membrane and its use in separation processes

(57)    The invention is directed to a composite ceramic/polymer membrane. The invention is further directed to the use of a composite membrane in pervaporation processes.

According to the present invention there is provided a composite membrane comprising a support and a separation layer that comprises a rubbery polymer, wherein an intermediate layer is present between the separation layer and the support.

EP 1 764 147 A1

## Description

The invention is directed to a composite membrane, in particular a composite ceramic/polymer membrane. The invention is further directed to the use of a composite ceramic/polymer membrane in separation processes, in particular in pervaporation processes, such as the dehydration of organic solvents and/or organic/organic separations.

Separation processes using membranes are gaining increasing importance in process industry because these processes have shown to be efficient and selective. One of the applications of membranes is in pervaporation processes. Pervaporation is the process of separation of mixtures of liquids by partial vaporization through a membrane. The membrane acts as a selective barrier; the liquid phase feed is partly retained, while the permeate vaporizes at the permeate side. Pervaporation thus allows the desired component(s) of the feed to transfer through the membrane by partial vaporization. The membrane operation is driven by a chemical potential difference across the membrane in which the retentate remains in the liquid phase, while the permeate is in the form of vapour. One of the important aspects of pervaporation is that only the fraction that is to be separated requires evaporation, and only the corresponding amount of heat has to be applied. By result, the pervaporation process is generally very energy efficient, provided it is carried out in a selective way.

Pervaporation may be used for the separation of azeotrope forming mixtures, in particular water/alcohol mixtures and furthermore for the separation of close boiling mixtures and for the dehydration of temperature-sensitive products.

Commercially available membranes for pervaporation are polymeric membranes based on for example poly(vinyl alcohol) (PVA), zeolite membranes (in particular NaA zeolite) and silica membranes. The latter two membrane types are inorganic, which makes them more suitable for higher temperature operation and/or operation under more severe chemical conditions. However, the stability of inorganic membranes is limited, and as a result these inorganic membranes still cannot be used at higher temperatures than is currently possible with PVA membranes.

Polymeric membranes, in particular hydrophilic membranes, such as the above-mentioned PVA membranes, may also be used for dehydration via pervaporation. However, at higher temperatures, the selectivity of the known hydrophilic polymeric membranes may decrease, due to the swelling and plasticization effects of the polymer selective layer. It has been suggested to suppress the swelling phenomena by crosslinking the polymeric material. However, this may result in an unacceptable decrease of the membrane flux.

An advantage of composite membranes (which comprise typically a separation layer mounted on some sort of support) is that the separation layer may be thinner as compared to membranes wherein a single separation layer is used as a membrane. As used herein the term "composite membrane" refers to a structure comprising two or more different parts, usually a support layer and present thereon a separation layer.

For the above reasons, to date pervaporation is used only to a limited extent. The above-mentioned issues give rise to higher investment costs (as compared to e.g. distillation) and also to insufficient stability of the composite membranes in operation. It is therefore very desirable to improve the performance of pervaporation based processes, in particular by providing a composite membrane.

An object of the present invention is to provide a membrane structure based on a polymeric separation layer that does not suffer, or to a lesser extent, from the above drawbacks.

It has been found that this object can be met by providing a composite membrane structure, wherein a polymeric membrane outer layer (also referred to as the separation layer) is applied onto a support by means of an intermediate layer.

Thus, in a first aspect, the present invention is directed to a composite membrane comprising a support and a separation layer that comprises a rubbery polymer, wherein an intermediate layer is present between said support and said separation layer.

The term "rubbery polymer" as used herein, refers to a polymer, in particular a cross-linked polymer that is in the rubbery, *viz.* non-glassy state. In accordance with the present invention the polymer of the separation layer may also contain a crystalline phase, given the amorphous phase is above the glass transition temperature. In other words the polymer is at the conditions present in the pervaporation process (presence of solvents, temperature) above its glass transition temperature (Tg). Without wishing to be bound by theory, the present inventors assume that by using a rubbery polymer in accordance with the present invention, its structure allows on the one hand for suitable interaction with the compound to be separated off from the mixture in the pervaporation process, but on the other hand by the interaction with the intermediate layer, the rubbery polymer does not experience excessive swelling. It is thought that the rubbery toplayer (under operational conditions) is partly pressed into the intermediate layer (because of the specific morphology of this layer in comparison with polymeric substrates). This can result in a part of the polymeric top layer that can not swell in the same way as the rest of the top layer. Excessive swelling is a known problem in the practical application of polymeric membranes for pervaporation.

The intermediate layer is an important feature of the present invention, since it provides a smooth surface finish to the support as a result of which the separation layer can be applied as a very thin layer, which is favorable for the membranes transport properties, in particular the transmembrane flux and the permeance.

The permeance is defined as the flux divided by the partial pressure difference across the membrane and can for small pressures at the permeate side be expressed as (see also Peters et al., J. Membr. Sci. 248 (2005) 73):

$$P_i = N_i / (\gamma \cdot x_i \cdot p_i^0)$$

wherein

$N_i$ (kg·m$^{-2}$·h$^{-1}$) refers to the flux of component $i$;
$\gamma_i$ (-) refers to the activity coefficient of component $i$;
$x_i$ (-) refers to the molar fraction of component $i$ in the retentate; and
$p_i^0$ (Pa) refers to the vapour pressure of pure component $i$.

The intermediate layer is thought to provide smoothness to the surface of the support so that the separation layer can be as thin as possible. At the same time it should have pores that allow mass transport. Preferably the intermediate layer is mesoporous. In particular it preferably has pores that are between 1 and 50 nm, more preferably between 1 and 10 nm.

In accordance with the present invention, the intermediate layer may have any suitable bulk and surface porosity. In particular the intermediate layer must provide sufficient mechanical strength on the one hand and provide for sufficient membrane flux on the other. Thus the porosity may vary widely, typically from 1 to 99 %, for instance from 30 to 60 %, depending on the specific application.

It was found that an intermediate layer having the above-mentioned requirements can very suitably be provided by applying a metal oxide layer, such as alumina, zirconia, titania, silica, and the like, as well as combinations thereof. Alumina, in particular γ-alumina is a preferred material for the intermediate layer. However, when the pH of the process flow is extreme (*e.g.* pH<4, or pH>10) other materials, in particular titania and zirconia, may be more preferred, since alumina has a limited stability at these extreme pH values. The composite membrane according to the invention can be prepared by a process comprising the steps of:

- on the substrate, intermediate mesoporous alumina layers can be prepared by dip-coating with a boehmite coating solution, followed by drying; which steps are optionally repeated, thus forming said intermediate layer. This is than followed by the application of the separation layer on said intermediate layer. Instead of boehmite coating solutions, which produce alumina layers, other solutions comprising inorganic materials can be used to prepare other types of intermediate layers.

The dipcoat solution used for the preparation of the intermediate is typically obtained by the hydrolysis of a pre-cursor suitable for the preparation of the intermediate layer (see also Peters et al., J. Membr. Sci. 248 (2005) 73).

The separation layer can be applied on top of the intermediate layer using conventional techniques, *e.g.* dipcoating the support with intermediate layer in a solution of the polymer for the separation layer and contacting it with a crosslinking agent, optionally followed by curing and/or drying.

An important advantage of the composite membranes of the present invention is that the separation layer can easily be removed if it needs to be renewed, e.g. because of normal wear. Removal of the separation layer can be done for instance by treatment with alkali solution in water by which the ester crosslinking bonds in the top layer will be broken, followed by dissolution of the PVA in hot water. The separation layer may also be removed by pyrolysis and/or oxidation (burning-off), optionally in the presence of an oxidizing agent such as oxygen or ozone. After the removal of the separation layer, a clean support still carrying the intermediate layer is obtained, which can be recoated with the polymeric separation layer, to obtain again a composite membrane in accordance with the present invention.

The thickness of the intermediate layer is preferably between 1-10 μm, preferably 2 - 5 μm. This provides for most supports a surface that is sufficiently smooth on the one hand, but on the other hand allows sufficient permeance.

The support provides mechanical stability to the composite membrane and it is therefore desirable to use a composition that provides for a rigid structure. At the same time it should be as open (porous) as possible.

Preferred compounds for the support are those selected from the group of metal oxides (e.g. titania, zirconia, alumina, in particular α-alumina); metals (in particular stainless steel, such as AISI 316 or other nickel containing alloys); glass or glass-like products (in particular sintered glass); and combinations thereof. The separation layer may be any rubbery polymer, in particular cross-linked polymers that are applied in the process of interest at a temperature above the polymer's glass transition temperature.

Polymers that may find use in the present invention, in particular for preferential permeation of water pervaporation are for instance: polyacrylates, polyacrylonitril and copolymers, polyacrylamide and copolymers, interfacial polymers (polyamides, polyurea, poyurethanes), polyelectrolytes, (anionic polymers, cationic polymers and polyelectrolyte complexes), carbohydrates (chitosan, cellulose-acetates, alginates) and proteins (collagen).

Preferred polymers comprise one or more polymers selected from poly(vinyl alcohol),and co-polymers of poly (vinyl acetate) and combinations thereof. These polymers are preferably crosslinked with suitable compounds, in particular maleic anhydride, succinic anhydride, glutaric anhydride and the like, glutaraldehyde and the like, or di-and polyfunctional isocyanates. The crosslinking may be initiated if necessary by exposure to a suitable initiator, e.g. to electromagnetic radiation, such as UV radiation.

The thickness of the separation layer is in principle as low as possible and generally only limited in thickness by the requirements with respect to mechanical strength. Generally this layer has a thickness of less than 5 $\mu$m, typically from 0.1 - 0.8 $\mu$m, *e.g.* about 0.5 $\mu$m.

Although the membranes of the present invention may have any practical size and shape, and may for instance be based on parallel oriented flat sheets, in a highly preferred embodiment, the composite membrane is based on a hollow-fibre membrane, *viz.* the support is a hollow-fibre membrane that may be previously prepared or commercially obtained, which is then coated with the intermediate layer and the separation layer as described hereinabove. It is preferred to apply the layers (intermediate layer and separation layer) on the outside surface of the hollow-fibre membranes, because this provides for a considerably larger exchange surface are when compared with the surface area that is obtained when the same support was to be coated on the inside. The hollow-fibre membranes typically have a circular cross section with a diameter ranging typically from 1 to 5 mm, preferably 2-4 mm, more preferably about 3 mm. The wall thickness is preferably 0.2 - 2 mm, more preferably 0.5 - 1.5 mm, most preferably about 1 mm. The length of these hollow-fibre membranes may vary from typically several centimeters e.g. 10-40 cm, up to 1 meter or more, depending on the application.

One of the surprising features of the membranes of the present invention is their separation behavior as a function of temperature and feed concentration. Surprisingly it was found that at least for the process of dewatering 2-propanol and 1-butanol when the temperature was increased, the selectivity increased as well, because the flux of the permeate component (the component to be separated) increased, whereas the flux of the retentate component across the membrane did not increase or only very little. This temperature behavior is not found in commercially available membranes, which do not comprise an intermediate layer. The same behavior was found when the concentration of component to be separated was increased. This behavior will be further illustrated in the examples hereinbelow.

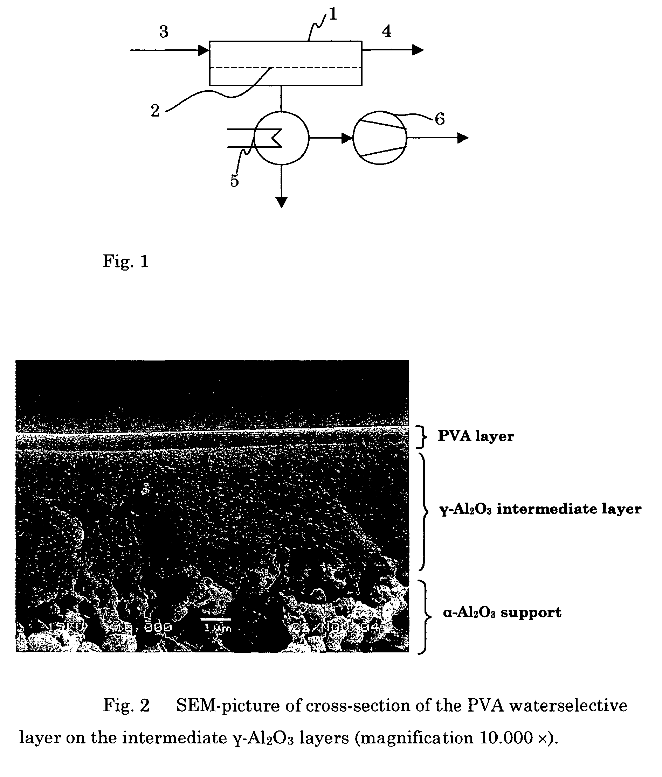

The invention is furthermore directed to a separation unit that comprises one or more composite membranes described above. Such a separation unit (1) is schematically depicted in Fig. 1. It comprises at least one composite membrane (2) according to the invention. The mixture to be separated (3) is fed to unit (1). Vacuum pump (6) is used to decrease the pressure on the permeate side of the membrane, *e.g.* to 0.005 - 0.1 bara, e.g. around 10 mbara. Condenser (5) is used to cool and condensate the permeate, which may then be collected.

Suitable mixtures to be separated by pervaporation using a membrane of the present invention are for instance water/alcohol mixtures wherein the water is to be removed, in particular lower alkyl ($C_1$-$C_4$) alcohols, such as water/ethanol or water/iso-propylalcohol mixtures or water/butanol. Also the membranes can be used for removing methanol from a mixture further comprising methyl *tert*-butyl ether (MTBE), which methanol is often left behind as unreacted compound in the synthesis of MTBE.

Apart from pervaporation, the membranes of the present invention may be applied in other applications as well, such as volatile organic compounds (VOC) removal with pervaporation or separation of non-aqueous components with nanofiltration. In general, all applications in which swelling of the polymeric membrane upon contact with one of the compounds becomes a problem can find benefit of the present invention.

The present invention will now be illustrated by the following nonlimiting examples. Unless indicated otherwise, all amounts are in grams and all ratios are on a weight basis.

## EXAMPLES

### Membrane preparation

$\alpha$-alumina hollow fibre membrane supports (CEPAration, the Netherlands) with a porosity of about 30%, a pore diameter of 300 nm, a length in the range of 20-30 cm, and an inner and outer diameter of 2.0 mm and 3.0 mm, respectively were used.

A boehmite coating solution was made by adding aluminium-tri-secbutoxide (Aldrich) dropwise to water at 90 °C under vigorous stirring, and subsequent boiling for 90 min to remove the 2-butanol produced during the hydrolysis. A white solution was obtained, which was peptised with 1 M $HNO_3$ (water/alkoxide/acid ratio: 70/1/0.07). The peptisation was accompanied by a change in colour from white to "nano" blue. After refluxing for 16 h the resulting solution had a pH of 3.8. Finally, 120 ml polyvinyl alcohol (PVA) solution was added to 180 ml boehmite solution, followed by stirring at room temperature for 30 min and subsequently stirring at 90 °C for 150 min (see also Peters et al., J. Membr. Sci. 248 (2005) 73).

On the outside of the fibres, mesoporous $\gamma$-alumina layers were prepared by four times sequential dip-coating with the boehmite coating solution. To minimise the amount of imperfections in the intermediate $\gamma$-alumina layer, the layer was prepared in a clean-room environment. The intermediate $\gamma$-alumina layers were modified by dip-coating in a 0.75 wt.% poly(vinyl alcohol) (PVA, Mowiol™ 56/98, Clariant) solution. The weight average molar mass of the PVA used is 195 kg·mol$^{-1}$, corresponding to a weight average degree of polymerisation of 4300. The degree of hydrolysis is 98.4%. Maleic anhydride (MA) was used as cross-linking agent in a concentration of 0.05 mol MA per mol of PVA. The membranes were dried at 55 °C for 30 min and cured at 130 °C for 1 hour.

## Membrane characterisation

### SEM

The membranes were analysed by scanning electron microscopy (SEM) and the pervaporation performance was determined for the dehydration of various aqueous alcohol mixtures as a function of both temperature and feed water concentration.

A cross-section of the composite ceramic-supported PVA membrane obtained as described above is shown in Figure 2. The membrane comprises three layers; a hydrophilic PVA layer, an intermediate γ-alumina layers and an α-alumina hollow fibre substrate.

From Figure 2 it can be seen that the four γ-alumina intermediate layers formed a single 3-4 μm thick layer on the substrate providing a smooth surface for the PVA layer. A 0.3 - 0.8 μm thick PVA layer was formed on top of the γ-alumina intermediate layer. Clearly, the presence of the intermediate layer enables the formation of a defect-free thin selective layer. Furthermore, the small pore-size of the intermediate layer avoids significant infiltration of PVA into the ceramic support, as can be expected from the large hydrodynamic radius of the PVA.

### PERVAPORATION - function of feed temperature

The pervaporation performance of the membranes as a function of the feed temperature was determined for the dehydration of ethanol, *1*-propanol, *2*-propanol and *1*-butanol.

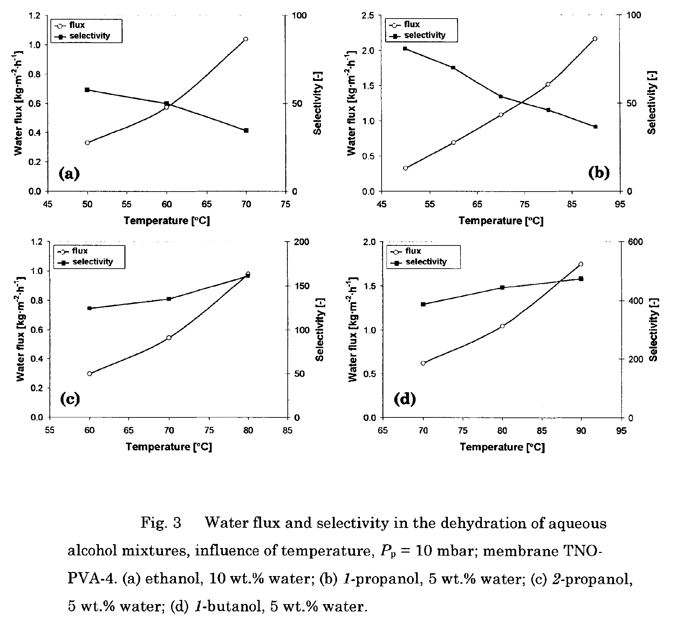

In Figure 3a-d, water flux and separation factor are depicted as a function of the feed temperature. Remarkably, both the water flux and the separation factor increased with increasing feed temperature in the case of *2*-propanol and *1*-butanol. From Figure 3a and b it is clear that in contrast to the dehydration of 2-propanol and *1*-butanol, the traditional trade-off between an increase in flux and decrease in selectivity is observed for the dehydration of ethanol and *1*-propanol.

An increase in both water flux and selectivity with temperature is generally observed for ceramic membranes, which do not show swelling, confirming the importance of membrane swelling on the flux/selectivity behavior of the ceramic-supported PVA membrane with temperature.

Without wishing to be bound by theory, it is assumed that an explanation for the different transport behavior of the alcohols with an increase in temperature may be a severely limited swelling of the selective layer combined with the molecular cross-section of the alcohol. Especially at the interface between the selective and the intermediate layer, the movement of PVA chains could be constrained because the surface of the intermediate layer is very smooth and contains pores roughly one order of magnitude smaller than the Flory radius of the PVA. For the alcohol with the largest molecular cross-section, the influence of this effect on the alcohol permeance will be the largest, which leads to different transport behavior.

### PERVAPORATION - function of feed water concentration

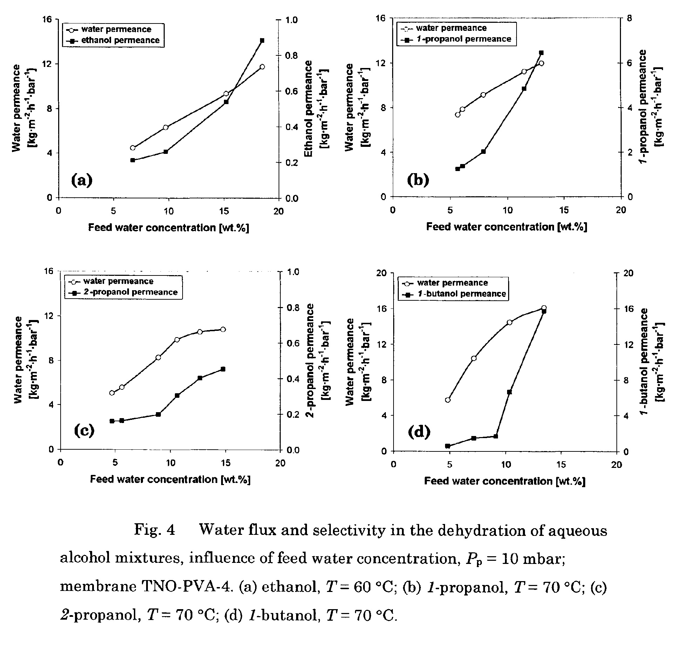

Dehydration experiments using various alcohols were performed at feed water concentrations ranging from 4.7 to 18.5 wt.%. In Figure 4a-d, water flux and separation factor are depicted as a function of the feed water concentration.

From Figure 4a-d it can be seen that an increase in feed water concentration results in an increase in the water flux for every alcohol/water system. For ethanol, *1*-propanol and *1*-butanol, the traditional trade-off between increased water flux and a decrease in selectivity is observed. The degree of swelling, due to the plasticizing effect of water on the polymer membrane, and the existence of a coupled transport can explain the increase in alcohol transport with an increase in feed water concentration.

Most interestingly, in the dehydration of *2*-propanol, process selectivity increases with an increase in feed water concentration between 4 and 9 wt.% whereas it decreases at higher water concentrations. Possibly, the alcohol permeance through the membrane is greatly affected by the amount of water molecules in contact with the selective layer of the membrane at water concentrations higher than 9 wt.% causing the membrane to swell drastically. Consequently, more alcohol molecules can pass through the membrane and selectivity decreases.

## Claims

1.  Composite membrane comprising a support and a separation layer that comprises a rubbery polymer, wherein an intermediate layer is present between said support and said separation layer.

2.  Composite membrane according to claim 1, wherein said intermediate layer is a mesoporous metal oxide layer.

3.  Composite membrane according to any of the previous claims, wherein said intermediate layer comprises a compound selected from the group of alumina, titania, zirconia, silica, and combinations thereof.

4.  Composite membrane according to claim 3, wherein said intermediate layer comprises γ-alumina.

5.  Composite membrane according to any of the previous claims, wherein said support comprises a compound selected from the group of metal oxides, metals, glasses and combinations thereof.

6. Composite membrane according to claim 5, wherein said support comprises a compound selected from the group of stainless steel, titania, sintered glass, $\alpha$-alumina.

7. Composite membrane according to any of the previous claims, wherein said separation layer comprises a polymer above its glass transition temperature (Tg).

8. Composite membrane according to any of the previous claims, wherein said separation layer comprises one or more polymers or copolymers selected from polyacrylates, polyacrylonitril, poly(vinyl alcohol), poly(dimethylsiloxane), polyimides, polyamides, poly (vinyl acetate), polyacrylamide, interfacial polymers, polyelectrolytes, carbohydrates, proteins (collagen) and combinations thereof.

9. Composite membrane according to claim 8, wherein said one or more polymers have been crosslinked, preferably using maleic anhydride, succinic anhydride, glutaric anhydride, glutaraldehyde and the like, bifunctional isocyanates, polyfunctional isocyanates and combinations thereof.

10. Composite membrane according to claim 8 or 9, wherein said one or more polymers or copolymers are selected from poly(vinyl alcohol), co-polymers of poly (vinyl acetate) and combinations thereof.

11. Composite membrane according to any of the previous claims, which is obtainable by a process comprising the steps of dipcoating said support in a mixture comprising a precursor for said intermediate layer, followed by drying, which steps are optionally repeated, thus forming said intermediate layer, followed by application of said separation layer on said intermediate layer.

12. Composite membrane according to any of the previous claims, wherein said intermediate layer has a thickness of 1-100 $\mu$m, preferably 2 - 50 $\mu$m.

13. Composite membrane according to any of the previous claims, which is a hollow-fibre membrane.

14. Separation process in which a membrane according to any of the previous claims, wherein the selectivity, the flux, or both increase with increasing temperature, feed water concentration, or both.

15. Separation unit comprising one or more composite membranes according to any of the previous claims.

Fig. 1

Fig. 2    SEM-picture of cross-section of the PVA waterselective layer on the intermediate $\gamma$-$Al_2O_3$ layers (magnification 10.000 x).

Fig. 3    Water flux and selectivity in the dehydration of aqueous alcohol mixtures, influence of temperature, $P_p$ = 10 mbar; membrane TNO-PVA-4. (a) ethanol, 10 wt.% water; (b) 1-propanol, 5 wt.% water; (c) 2-propanol, 5 wt.% water; (d) 1-butanol, 5 wt.% water.

Fig. 4    Water flux and selectivity in the dehydration of aqueous alcohol mixtures, influence of feed water concentration, $P_p$ = 10 mbar; membrane TNO-PVA-4. (a) ethanol, $T$ = 60 °C; (b) 1-propanol, $T$ = 70 °C; (c) 2-propanol, $T$ = 70 °C; (d) 1-butanol, $T$ = 70 °C.

**European Patent Office**

## EUROPEAN SEARCH REPORT

Application Number

EP 05 07 7144

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 537 929 A (TEXACO DEVELOPMENT CORP.) 21 April 1993 (1993-04-21) * page 4, line 21 - line 25 * * page 5, line 26 - line 35 * ----- | 1-15 | B01D69/12 B01D13/04 |
| A | US 2004/244590 A1 (Y. HUA MA ET AL.) 9 December 2004 (2004-12-09) * claims 1-42 * ----- | 1-15 | |
| A | EP 0 181 850 A (MONSANTO COMPANY) 21 May 1986 (1986-05-21) * page 6, line 19 - line 28; claims 1-13 * ----- | 1-15 | |

| | |
|---|---|
| | TECHNICAL FIELDS SEARCHED (IPC) |
| | B01D |

The present search report has been drawn up for all claims

| Place of search | Date of completion of the search | Examiner |
|---|---|---|
| Munich | 10 November 2005 | Luethe, H |

EPO FORM 1503 03.82 (P04C01)

## ANNEX TO THE EUROPEAN SEARCH REPORT
## ON EUROPEAN PATENT APPLICATION NO.

EP 05 07 7144

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2005

| Patent document cited in search report | | Publication date | Patent family member(s) | | Publication date |
|---|---|---|---|---|---|
| EP 0537929 | A | 21-04-1993 | DE | 69204136 D1 | 21-09-1995 |
| | | | DE | 69204136 T2 | 11-01-1996 |
| US 2004244590 | A1 | 09-12-2004 | NONE | | |
| EP 0181850 | A | 21-05-1986 | JP | 61054204 A | 18-03-1986 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PETERS et al.** *J. Membr. Sci.,* 2005, vol. 248, 73